# EUROPEAN PATENT APPLICATION

(11) **EP 1 769 874 A2**
(43) Date of publication of application: **04.04.2007**
(21) Application number: 06254968.8
(22) Date of filing: 26.09.2006
(51) Int. Cl.: B23K 3/06

(54) **Soldering apparatus**

(30) Priority: 28.09.2005 JP 2005282012; 28.09.2005 JP 2005282013; 28.09.2005 JP 2005282015
(71) Applicant: NIHON DEN-NETSU KEIKI CO., LTD., Ohta-ku Tokyo (JP)
(72) Inventor: Toba, Hideaki, Nihon Den-Netsu Keiki Co., Ltd., Yokohama-shi Kanagawa-ken (JP)
(74) Representative: Waldren, Robin Michael

(57) **Abstract**

An R-ALIP type electromagnetic pump (300) having an inner core (303), a linear pipe (302), and a combination of an outer core (301 a) and coils (301 b) provided around the linear pipe (302) is disposed outside a solder vessel (101) containing a molten solder (100). The solder vessel (101) has a bottom wall (101 a) made of an iron having at least 100 times as high a magnetic permeability as that of the molten solder (100) and having a magnetic permeability not less than that of the inner core (303) and a wall thickness not less than that of the inner core (303) so that a magnetic field from the R-ALIP type electromagnetic pump (300) cannot leak into the solder. Therefore, a stray current derived from an alternating magnetic field can be prevented from spreading in the molten solder (100).

## Description

The present invention relates to a soldering apparatus for soldering a printed wiring board having electronic parts mounted thereon.

Linear electromagnetic pumps (LEP), which directly apply an electromagnetic force to a medium to be transported to generate a thrust therein and use the thrust as a delivery force and a suction force, are roughly divided into two types: induction type and conduction type. In general, induction type pumps, which do not require passage of electric current through the medium to be transported, are widely used.

Induction type electromagnetic pumps include FLIP type (flat linear induction pump), ALIP type (annular linear induction pump), and HIP type (helical induction pump). Each type of the pumps has its own peculiar constitution.

A soldering apparatus employing an ALIP type electromagnetic pump is disclosed in US Patent No. 6,726,082. This apparatus is characterized in that an ALIP type electromagnetic pump can be operated in a molten solder to produce no energy loss and prevent damages of electronic parts.

Especially, the soldering apparatus is excellent in that the molten solder is used as a means for attenuating a leakage magnetic field from the electromagnetic pump to prevent a leakage magnetic field from damaging or applying stress to electronic parts which operate on a minute current or at a low voltage during soldering.

An example of an ALIP type electromagnetic pump is disclosed in JP-A-H05-260719.

In a soldering apparatus employing an induction type electromagnetic pump, the projecting state of molten solder can be stably maintained and the reproducibility and stability of parameters used for feeding the molten solder are very high. Therefore, soldering can be always carried out under the same conditions and stable soldering quality can be obtained.

However, in the soldering apparatus disclosed in US Patent No. 6,726,082, since the ALIP type electromagnetic pump is immersed in the molten solder, the electromagnetic pump must be drawn up while the solder is in a molten state at maintenance or replacement of the electromagnetic pump.

It was, therefore, thought of disposing an ALIP type electromagnetic pump outside the vessel walls of a solder vessel, as disclosed in Japanese Unexamined Patent Publication No. JP-A-2005-205479. In this configuration, the molten solder is sucked into a solder flow path located outside the vessel walls of the solder vessel and supplied to a nozzle. Since the ALIP type electromagnetic pump is located outside the solder vessel, maintenance or replacement thereof can be carried out easily.

In the soldering apparatus disclosed in US Patent No. 6,726,082, however, since the molten solder is used to attenuate a leakage magnetic field, in other words, the molten solder serves as a short ring (short band), a current may leak into the molten solder. The leakage of the current should be reduced in microfablication of semiconductors as electronic parts.

The soldering apparatus disclosed in JP-A-2005-205479 has no means for blocking or capturing a leakage magnetic field generated around the electromagnetic pump, and the printed wiring boards and electronic parts mounted thereon may be exposed to the leakage magnetic field. A leakage magnetic field is often generated at discharge port and suction port at both ends of an electromagnetic pump.

The present invention has been made to overcome the above problems.

In accordance with a first aspect of the present invention there is provided a soldering apparatus for soldering a printed wiring board, comprising:

a solder vessel containing a molten solder and having a bottom wall provided with a hole;

a nozzle disposed in said solder vessel and having a first opening at one end thereof and a second opening at the other end thereof, said first opening being positioned above the surface level of the molten solder contained in said solder vessel; and

an electromagnetic pump including

a linear pipe having a closed end and an open end which is opposite said closed end and which is connected to said hole so that the molten solder in said solder vessel can flow into said linear pipe,

a cylindrical inner core defining a solder return path therein and disposed within said linear pipe to define an annular, solder flow path therebetween, said inner core having an upper opening connected to said second opening of said nozzle and a lower opening facing said closed end of said linear pipe, and

an outer core with electrically energizable coils disposed to surround said linear pipe and configured to generate a moving magnetic field in said solder flow path when said coils are electrically energized, so that the molten solder flows downward through said solder flow path, then flows upward through said solder return path and is projected from said first opening of said nozzle to form a solder wave above said first opening,

wherein said bottom wall of said solder vessel is made of an iron having at least 100 times as high a magnetic permeability as that of the molten solder and has a magnetic permeability not less than that of said inner core and a wall thickness not less than that of said inner core.

A second aspect of the present invention provides a soldering apparatus for soldering a printed wiring board, comprising:

a solder vessel containing a molten solder and having a bottom wall provided with a hole;

a nozzle disposed in the solder vessel and having a first opening at one end thereof and a second opening at the other end thereof, the first opening being positioned above the surface level of the molten solder contained in the solder vessel;

an electromagnetic pump including a linear pipe having a closed end and an open end which is opposite the closed end and which is connected to the hole so that the molten solder in the solder vessel can flow into the linear pipe, a cylindrical inner core defining a solder return path therein and disposed within the linear pipe to define an annular, solder flow path therebetween, the inner core having an upper opening connected to the second opening of the nozzle and a lower opening facing the closed end of the linear pipe, and an outer core with electrically energizable coils disposed to surround the linear pipe and configured to generate a moving magnetic field in the solder flow path when the coils are electrically energized, so that the molten solder flows downward through the solder flow path, then flows upward through the solder return path and is projected from the first opening of the nozzle to form a solder wave above the first opening;

a heater disposed in the solder vessel for heating the solder; and

a control means for controlling a supply of electric power to the heater and a supply of electric power to the coils of the electromagnetic pump,

the control means being configured to control the supply of electric power to the heater and the supply of electric power to the coils of the electromagnetic pump at a time the solder in the solder vessel is transformed from a solidified state to a molten state, such that the solder in the solder vessel starts melting before the solder in the linear pipe starts melting and that the melting of the solder in the solder vessel is completed simultaneously with or before the completion of the melting of the solder in the linear pipe.

A third aspect of the present invention provides a method for starting a soldering apparatus for soldering a printed wiring board,

the soldering apparatus comprising:

a solder vessel containing a molten solder and having a bottom wall provided with a hole,

a nozzle disposed in the solder vessel and having a first opening at one end thereof and a second opening at the other end thereof, the first opening being positioned above the surface level of the molten solder contained in the solder vessel,

an electromagnetic pump including a linear pipe having a closed end and an open end which is opposite the closed end and which is connected to the hole so that the molten solder in the solder vessel can flow into the linear pipe, a cylindrical inner core defining a solder return path therein and disposed within the linear pipe to define an annular, solder flow path therebetween, the inner core having an upper opening connected to the second opening of the nozzle and a lower opening facing the closed end of the linear pipe, and an outer core with electrically energizable coils disposed to surround the linear pipe and configured to generate a moving magnetic field in the solder flow path when the coils are electrically energized, so that the molten solder flows downward through the solder flow path, then flows upward through the solder return path and is projected from the first opening of the nozzle to form a solder wave above the first opening,

a heater disposed in the solder vessel for heating the solder, and

a control means for controlling a supply of electric power to the heater and a supply of electric power to the coils of the electromagnetic pump,

the method comprising a step of controlling the supply of electric power to the heater and the supply of electric power to the coils of the electromagnetic pump at a time the solder in the solder vessel is transformed from a solidified state to a molten state, such that the solder in the solder vessel starts melting before the solder in the linear pipe starts melting and that the melting of the solder in the solder vessel is completed simultaneously with or before the completion of the melting of the solder in the linear pipe.

A fourth aspect of the present invention provides a soldering apparatus for soldering a printed wiring board, comprising:

a plurality of solder vessels each containing a molten solder and having a bottom wall provided with a hole;

a plurality of nozzles corresponding in number to the number of the solder vessels and disposed in the corresponding solder vessels, each of the nozzles having a first opening at one end thereof and a second opening at the other end thereof, the first opening being positioned above the surface level of the molten solder contained in the corresponding solder vessel;

a plurality of linear pipes corresponding in number to the number of the solder vessels and each having a closed end and an open end which is opposite the closed end and which is connected to the hole of the corresponding solder vessel so that the molten solder in each solder vessel can flow into the corresponding linear pipe;

a plurality of cylindrical inner cores corresponding in number to the number of the linear pipes and each defining a solder return path therein and disposed within the corresponding linear pipe to define an annular, solder flow path therebetween, each of the inner cores having an upper opening connected to the second opening of the corresponding nozzle and a lower opening facing the closed end of the corresponding linear pipe; and

one or more drive means each including an outer core and electrically energizable coils, each of the drive means being selectively positionable relative to a desired one of the linear pipes to generate a moving magnetic field in the corresponding solder flow path when the coils thereof are electrically energized, so that the molten solder flows downward through the corresponding solder flow path, then flows upward through the corresponding solder return path and is projected from the first opening of the corresponding nozzle to form a solder wave above the corresponding first opening.

A fifth aspect of the present invention provides a soldering apparatus for soldering a printed wiring board, comprising:

a solder vessel containing a molten solder and having a bottom wall provided with a plurality of holes;

a plurality of nozzles corresponding in number to the number of the holes and disposed in the solder vessel, each of the nozzles having a first opening at one end thereof and a second opening at the other end thereof, the first opening being positioned above the surface level of the molten solder contained in the solder vessel;

a plurality of linear pipes corresponding in number to the number of the holes and each having a closed end and an open end which is opposite the closed end and which is connected to the corresponding hole so that the molten solder in the solder vessel can flow into the corresponding linear pipe;

a plurality of cylindrical inner cores corresponding in number to the number of the linear pipes and each defining a solder return path therein and disposed within the corresponding linear pipe to define an annular, solder flow path therebetween, each of the inner cores having an upper opening connected to the second opening of the corresponding nozzle and a lower opening facing the closed end of the corresponding linear pipe; and

one or more drive means each including an outer core and electrically energizable coils, each of the drive means being selectively positionable relative to a desired one of the linear pipes to generate a moving magnetic field in the corresponding solder flow path when the coils thereof are electrically energized, so that the molten solder flows downward through the corresponding solder flow path, then flows upward through the corresponding solder return path and is projected from the first opening of the corresponding nozzle to form a solder wave above the corresponding first opening.

The present invention will be described in more detail below with reference to the accompanying drawings in which:

FIG. 1 is a view illustrating an example of the configuration of a soldering apparatus according to a first embodiment of the present invention;

FIG. 2 is a perspective view illustrating the entire appearance of the soldering apparatus according to the first embodiment of the present invention;

FIG. 3 is an exploded perspective view illustrating the relation among a linear pipe, an inner core, and a drive means of an ALIP type electromagnetic pump of the first embodiment of the present invention;

FIG. 4(a) is a partial cross-sectional view illustrating an anti-corrosive electrically insulating layer on a solder vessel of the soldering apparatus shown in FIG. 1;

FIG. 4(b) is a partial cross-sectional view illustrating the anti-corrosive electrically insulating layer on the inner core of the ALIP type electromagnetic pump of the soldering apparatus shown in FIG. 1;

FIG. 5 is a view illustrating an example of the configuration of a soldering apparatus according to a second embodiment of the present invention;

FIG. 6 is a view illustrating an example of the configuration of a soldering apparatus according to a third embodiment of the present invention;

FIG. 7 is a flowchart illustrating an example of a control operation at the start of soldering apparatus according to the third embodiment of the present invention.

FIG. 8 is a view illustrating an example of the configuration of a soldering apparatus according to a fourth embodiment of the present invention;

FIG. 9 is a view illustrating an example of the configuration of a soldering apparatus according to a fifth embodiment of the present invention; and

FIG. 10 is a perspective view illustrating the entire appearance of the soldering apparatus according to the fifth embodiment of the present invention.

### First Embodiment

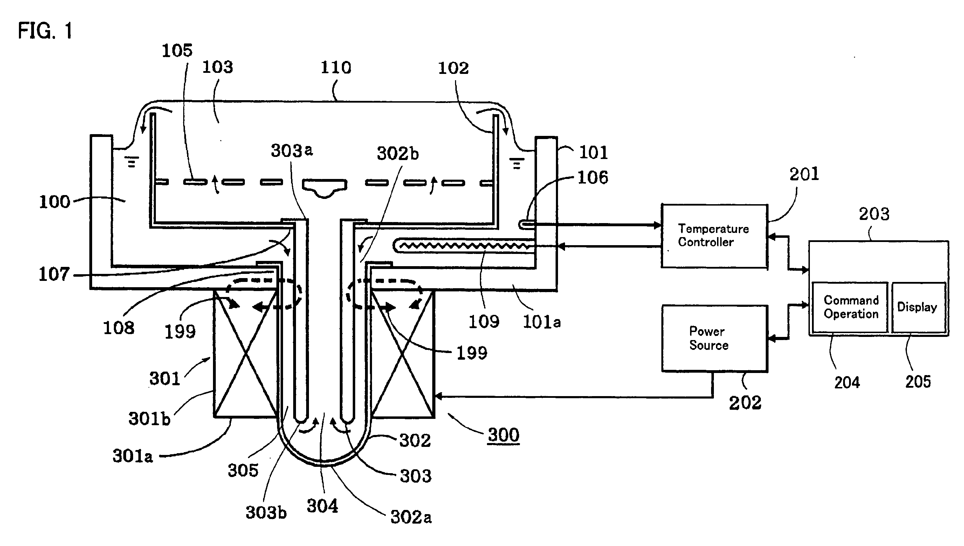

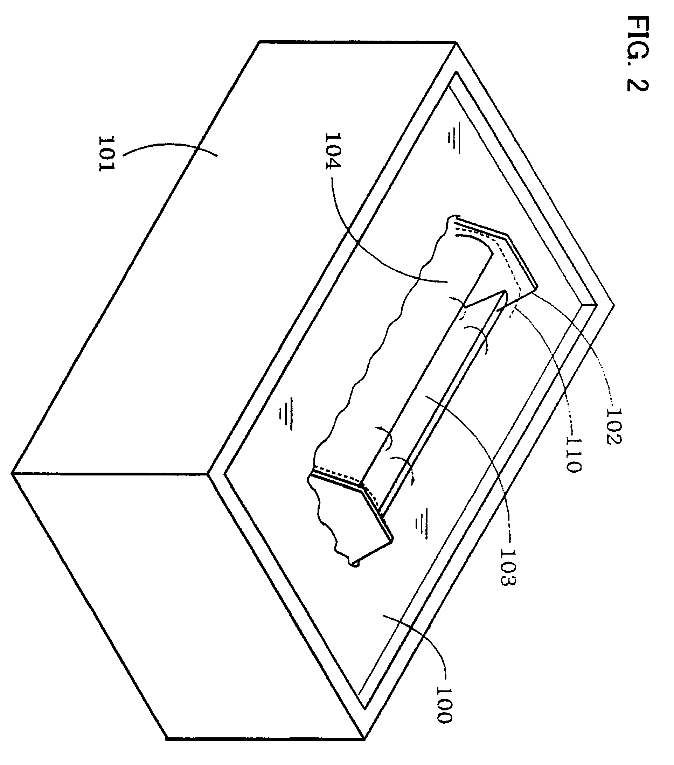

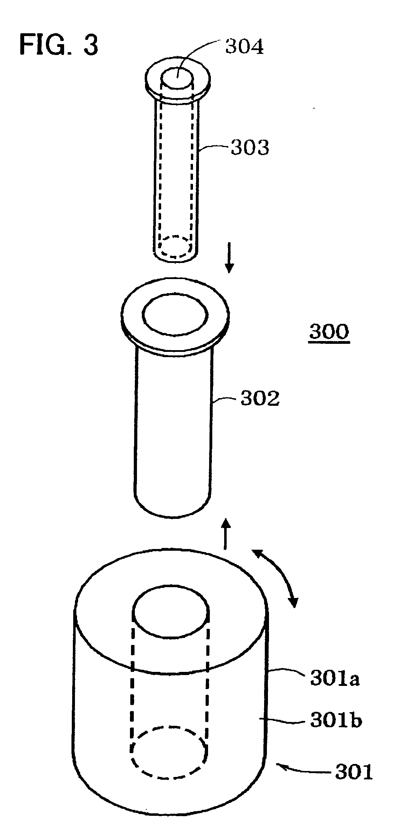

Description will be hereinafter made of a soldering apparatus according to a first embodiment of the present invention with reference to FIGs. 1 to 3.

FIG. 1 depicts a solder vessel 101 shown in a vertical cross-sectional view and a control system shown in a block diagram. The solder vessel 101 has vessel walls including a bottom wall 101a along which a heater 109 for melting a solder 100 in the solder vessel 101 and maintaining the molten solder 100 at a desired temperature is disposed.

Designated as 201 is a temperature control device for controlling the temperature of the solder 100 in the solder vessel 101. The temperature control device 201 controls the temperature of the solder 100 at a desired value by controlling the supply of electric power to the heater 109 based on the result of detection by the temperature sensor 106.

The bottom wall 101 a of the solder vessel 101 is provided with a hole 108, to which a linear pipe 302 for an ALIP type electromagnetic pump 300 is connected by means of welding or screwing. The linear pipe 302 has a closed end 302a and an open end 302b which is connected to the hole 108 of the bottom wall 101 a so that the molten solder 100 in the solder vessel 101 can flow into the linear pipe 302.

A nozzle 102 for forming a solder wave 110 is disposed in the solder vessel 101. The nozzle has a first opening 103 at one end thereof and a second opening 107 at the other end thereof. The first opening 103 is positioned above the surface level of the molten solder 100 contained in the solder vessel 101. The nozzle 102 is provided therein with a straightening plate 105 for smoothing the flow of the molten solder 100. When the molten solder 100 is projected from the first opening 103, a projected wave 110 is formed above the first opening 103 and the molten solder 100 flows down on guide plates 104 provided on both sides of the first opening 103.

A cylindrical inner core 303 defining an axially extending solder return path 304 therein is removably inserted into the linear pipe 302 to define an annular, solder flow path 305 therebetween. The inner core 303 has an upper opening 303a connected to the second opening 107 of the nozzle 102 and a lower opening 303b facing the closed end 302a of the linear pipe 302. The solder return path 304 of the inner core 303 is communicated with the second opening 107 of the nozzle 102.

The inner core 303 and the nozzle 102 are removably fixed to the solder vessel 101 by a support means (not shown).

A drive means 301, in which an outer core 301 a and coils 301 b are integrally combined, for generating a moving magnetic field in the solder flow path 305 is rotatably and removably provided around the linear pipe 302. When the coils 301 b are electrically energized, the molten solder 100 flows downward through the solder flow path 305, then flows upward through the solder return path 302 and is projected from the first opening 103 of the nozzle 102 to form a solder wave above the first opening 103.

Since the drive means 301 is rotatable around the linear pipe 302, the drive means 301 can be in close contact with the linear pipe 302, and an optimum magnetic field distribution can be selected to stabilize a thrust in the solder flow path 305. This type of ALIP type electromagnetic pump 300 is referred to as "return through type annular linear induction (R-ALIP type) electromagnetic pump 300."

The ALIP type electromagnetic pump 300 usually has a circular cylindrical shape since the outer core 301 a can be formed into a circular cylindrical shape. The inner core 303 also has a circular cylindrical shape, and a moving magnetic field is generated in an annular space, that is, flow path, between the outer core 301 a and the inner core 303 and applied to the solder to provide a thrust, more specifically, a delivery force and a suction force, thereto. Incidentally, the ALIP type electromagnetic pump disclosed in US Patent 6,726,082 is called straight through type as the flow path therein is straight.

The R-ALIP type electromagnetic pump 300 (which will be referred to as ALIP type electromagnetic pump 300) is connected to a multi-phase AC power source 202 (such as a WVF three-phase inverter power source) for supplying multi-phase AC electric power to the coils 301b of the electromagnetic pump 300.

As described above, in the present invention, the ALIP type electromagnetic pump 300 is disposed outside the vessel walls of the solder vessel 101 as shown in FIG. 1, and the molten solder 100 sucked into the solder flow path 305 located outside the vessel walls of the solder vessel 101 is supplied to the nozzle 102. Therefore, maintenance or replacement of the ALIP type electromagnetic pump 300 can be carried out easily.

The voltage and frequency of the electric power from the multi-phase AC power source 202 can be arbitrarily adjusted through communication with a control device 203.

The control device 203 is a computer system and includes a command operation part 204 such as a keyboard, a display part 205 such as an LCD, and a CPU, a ROM, a RAM, a hard disk, which are not shown, and so on. The CPU in the control device 203 loads a program stored in the hard disk into the RAM and executes the program to perform various control functions.

The control device 203 controls the operation of the multi-phase AC power source 202 according to commands from the command operation part 204. The temperature control device 201 also controls the electric power to be supplied to the heater 109 and the controlling targets such as the temperature and PID of the heater 109 through communication with the control device 203.

The melting point of the solder depends on the type thereof. For example, the melting point is about 183°C for a conventional tin-lead solder (for example, 37 wt% lead and balance of tin), about 199°C for a lead-free tin-zinc solder (for example, 9 wt% zinc and balance of tin), and about 220°C for a tin-silver-copper solder (for example, about 3.5 wt% silver, about 0.7 wt% of copper and balance of tin).

Thus, the temperature of the solder for use in soldering of printed wiring boards is varied depending upon the type of the solder. However, considering the temperatures which electronic parts mounted on the printed wiring boards can withstand, the solder is usually used in a temperature range of about 220 to 260°C.

It is important that the bottom wall 101 a of the solder vessel 101 should be made of an iron having at least 100 times as high a magnetic permeability as that of the molten solder 100 and should have a magnetic permeability not less than that of the inner core 303 and a wall thickness not less than that of the inner core 303.

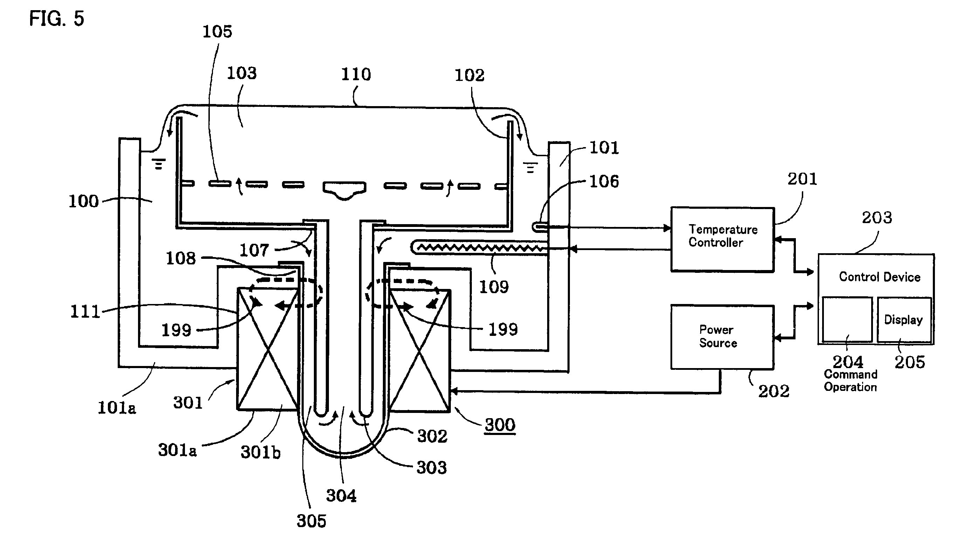

The bottom wall of 101 a of the solder vessel 101, and the inner core 303 are each preferably made of a cast iron such as FCD-400 or FCD-500 (JIS). Further, the bottom wall 101 a of the solder vessel 101 has a wall thickness not less than that of the inner core 303. This is because the magnetic resistance is in inverse proportion to the cross-sectional area. That is, when the thickness of the bottom wall of 101 a of the solder vessel 101 is not less than that of the inner core 303, most of the leakage magnetic field from the electromagnetic pump 300 is captured by the bottom wall of 101 a of the solder vessel 101 at the hole 108 and does not leak into the inside of the solder vessel 101, that is, into the molten solder 100. The leakage magnetic field is attenuated through the routes indicated by broken line arrows 199 in FIG. 1 and FIG. 5, which will be described later.

Most of the moving magnetic field having reached from the outer core 301 a of the electromagnetic pump 300 to the inner core 303 through the solder flow path 305 returns to the outer core 301 a through the same route in reverse direction. At this time, a leakage magnetic field is unavoidably generated at the suction port and discharge port at both ends of the electromagnetic pump 300. The leakage magnetic field can be prevented from leaking into the molten solder 100.

Stainless steel, conventionally used as a material for solder vessels, is a non-magnetic material, and the solders are also non-magnetic materials (with a magnetic permeability of a few dozens or less at most). On the contrary, a member made of an iron such as a cast iron has a magnetic permeability of about a few thousand to 10000. Because of the magnetic permeability which is more than 100 times greater, the leakage magnetic field is captured by the bottom wall 101 a of the solder vessel 101 with a low magnetic resistance. In addition, when the bottom wall 101a the solder vessel 101 is made of an iron with a magnetic permeability which is equal to or greater than that of the inner core 303 of the electromagnetic pump 300, the leakage magnetic field can be captured reliably. To prevent leakage of a leakage magnetic field into the molten solder more reliably, the entire solder vessel 101 (namely, not only the bottom wall 101 but also the other walls of the solder vessel 101) may be made of an iron, preferably cast iron, having at least 100 times as high a magnetic permeability as that of the molten solder 100 and may have a magnetic permeability not less than that of the inner core 303 and a wall thickness not less than that of the inner core 303.

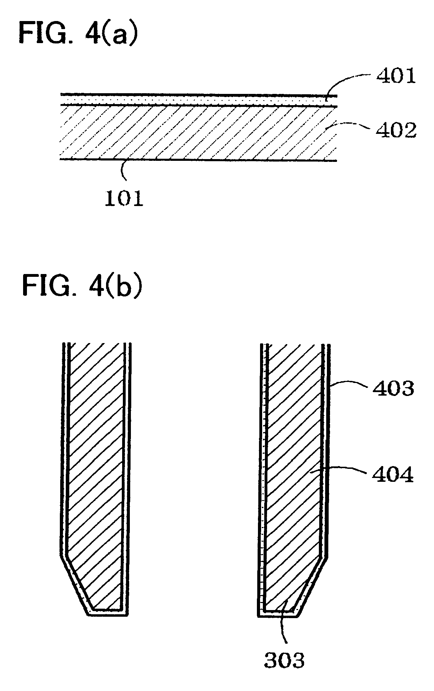

Incidentally, when an alternating magnetic field passes through a conductive material, an eddy current is generated. Therefore, the interior surface of the solder vessel 101 and the entire surface of the inner core 303 are preferably covered with electrically insulating layers (designated as 401, 403 in FIG. 4, which is described later) with corrosion resistance against solders to prevent the eddy current from entering the molten solder 100 as a stray current.

As the insulating layers, ceramics layers, nitride layers, or intermetallic layers (such as iron-aluminum intermetallic layer) can be used. The layers must not be porous and must not have air holes or cracks. When the thickness of the layers is too small, a leakage current tends to be generated and dielectric breakdown is likely to occur. Also, the layers are easily corroded by the molten solder 100. When the layers have a thickness of at least 30 µm, the layers can endure for at least five years, that is, can have durability which allows a projected wave forming device for soldering electronic parts to be used in production cites for a period generally equal to the intervals between overhauls thereof.

FIG. 4(a) is a partial cross-sectional view illustrating the anti-corrosive electrically insulating layer on the bottom wall 101 a of the solder vessel 101, and FIG. 4(b) is a partial cross-sectional view illustrating the anti-corrosive electrically insulating layer on the inner core 303.

As shown in FIG. 4(a), the solder vessel 101 has a wall structure having a cast iron layer 402 and an anti-corrosive electrically insulating layer 401 with a thickness of at least 30 µm provided to cover the iron layer 402. As shown in FIG. 4(b), the inner core 303 has a wall structure having a cast iron layer 404 and an anti-corrosive electrically insulating layer 403 with a thickness of at least 30 µm provided to cover the iron layer 404.

Although the anti-corrosive electrically insulating layer 401 covers only the interior surface of the solder vessel 101 as only the interior surface contacts the molten solder 100, the exterior surface of the solder vessel 101 may be covered with the anti-corrosive electrically insulating layer 401. The inner core 303 is covered throughout with the anti-corrosive electrically insulating layer 403 since the entire surface thereof contacts the molten solder 100.

The linear pipe 302 is made of a stainless since it must be made of a non-magnetic material. Stainless materials have corrosion resistance but it is not necessarily sufficient against a tin-rich lead-free solder. Therefore, the linear pipe 302 is preferably made of titanium with higher corrosion resistance.

Titanium is a non-magnetic material with magnetic susceptibility similar to that of aluminum. Titanium has a thermal conductivity of 17 W/m·K, which is similar to that of a stainless (SUS304), which is 16 W/m·K. For reference, titanium has an electrical specific resistance of 0.55 µΩ·m, which is similar to that of a stainless (SUS304), which is 0.72 µΩ·m. The electrical specific resistances of tin and copper for use in tin-rich lead-free solders are 0.12 µΩ·m and 0.017 µΩ·m, respectively. The electrical specific resistances of stainless and titanium is 5 to 30 times greater than those of the tin-rich lead-free solders and copper. Therefore, the linear pipe 302 is preferably made of titanium in view of transferring heat loss from the drive means 301 to the molten solder 100 to cool the drive means 301 and use the heat loss effectively.

Although a moving magnetic field directly passes through the linear pipe 302, an eddy current generated in the linear pipe 302 seldom spreads in the molten solder 100 in the solder vessel 101 as a stray current since the linear pipe 302 is not located inside the solder vessel 101 as the inner core 303 is. However, to prevent corrosion of the linear pipe 302 by the molten solder 100 and to suppress an eddy current from spreading as a stray current completely, it is effective that the linear pipe 302 is covered with an electrically insulating layer with corrosion resistance against solders.

As described above, according to the soldering apparatus of this embodiment, the ALIP type electromagnetic pump 300 is disposed outside the solder vessel 101, and, especially, the drive means 301 including the coils 301 b is removably provided, the maintenance or replacement of the electromagnetic pump 300 can be carried out easily.

Also, since the bottom wall 101a of the solder vessel 101 is made of an iron having at least 100 times as high a magnetic permeability as that of the molten solder and has a magnetic permeability not less than that of the inner core 303 and a wall thickness not less than that of the inner core 303, a leakage magnetic field and a stray current can be prevented from leaking into the molten solder 100. Therefore, soldering of electronic parts can be carried out without causing damages thereof or applying stress thereto with high reliability.

### Second Embodiment

Description will be hereinafter made of a soldering apparatus according to a second embodiment of the present invention with reference to FIG. 5.

FIG. 5 is a view illustrating an example of the configuration of a soldering apparatus according to the second embodiment of the present invention, in which a solder vessel 101 is shown in a vertical cross-sectional view, and a control system is shown in a block diagram. The component parts corresponding to those in FIG. 1 are designated by the same reference numerals, and their description will not be repeated here. The difference between this embodiment and the first embodiment shown in FIG. 1 is that the bottom wall 101 a of the solder vessel 101 has a recess 111 for receiving the drive means 301 (the outer core 301 a and the coils 301 b) to increase the capacity of the solder vessel 101 without increasing the maximum dimensions of the soldering apparatus.

In this configuration, since heat loss from the electromagnetic pump 300 can be directly transferred to the solder vessel 101 and the solder 100 contained therein from the drive means 301 (the outer core 301 a and the coils 301 b) as well as from the linear pipe 302, the total energy efficiency of the soldering apparatus can be improved.

In addition, since the entire electromagnetic pump 300 is surrounded by the bottom wall 101a of the solder vessel 101 made of an iron material, generation of a leakage magnetic field can be prevented more reliably.

Since the capacity of the solder vessel 101 is increased so that the solder vessel 101 can contain a larger amount of solder, the decrease in temperature of the molten solder 100 at the time when the work to be soldered contacts the projected wave 110 can be small and the temperature of the molten solder 100 can be maintained stably in large-scale production.

### Third embodiment

The soldering apparatus disclosed in JP-A-2005-205479 has a heater for heating the solder in the solder vessel, a temperature sensor, and a temperature controlling device to melt the solder in the solder vessel and maintain the molten solder at a desired temperature. However, since the ALIP type electromagnetic pump is located outside the walls of the solder vessel and since solders have a high heat of fusion, it takes a long time until the solder in the linear pipe of the electromagnetic pump is melted completely after the solder in the solder vessel has been melted.

Therefore, it takes a long time until a projected wave can be formed after the start of the soldering apparatus.

The soldering apparatus disclosed in JP-A-2005-205479 is provided with a cap for closing the injection port of the nozzle so that induction heating of the solder in the linear pipe can be performed with the injection port of the nozzle closed with the cap. The induction heating is performed while measuring the temperature of the solder in the linear pipe with a temperature sensor dangled from the cap, and the supply of electric power to the electromagnetic pump is shut off when the temperature sensor detects the fact that the solder in the solder flow path is melted.

In the soldering apparatus disclosed in JP-A-2005-205479, however, the cap must be attached to or removed from the injection port of the nozzle at the start or stop of the soldering apparatus. In addition, the cap must be removed after the solder in the solder vessel has been melted and reached a high temperature (220 to 260°C). This is very dangerous. Also, the cap must be attached with the temperature sensor dangled into the solder in the linear pipe while the solder is in a molten state after soldering. This is also very dangerous.

Also, the soldering apparatus disclosed in JP-A-2005-205479 does not take the possibility into account that when only the solder at the bottom of the solder vessel is melted with most of the solders in the solder vessel in a solidified state, a high expansion pressure is applied to the molten solder because of an expansion in the volume of the molten solder. That is, high-temperature molten solder with an explosive pressure may jet out through cavities in the solidified solder (cavities resulting from solidification shrinkage) and gaps between the linear pipe or the inner core and the solidified solder (gaps resulting from solidification shrinkage) to a height of a few meters and splash over the operators and devices around the soldering apparatus. This phenomenon is well known to those skilled in the art. In JP-A-2005-205479, there is no description about a means for securing the cap over the injection port such as screwing. Therefore, there is the possibility that the cap is blown off by the jet flow of the molten solder.

Even if the cap is secured by means of screwing or the like, those skilled in the art should not melt the solder at the bottom of the solder vessel with a cap secured to the injection port of the nozzle. There is a possibility that when the cap is removed, a jet of molten solder may splash over the operator.

A third embodiment of the present invention provides a method for shortening the starting time of a soldering apparatus safely.

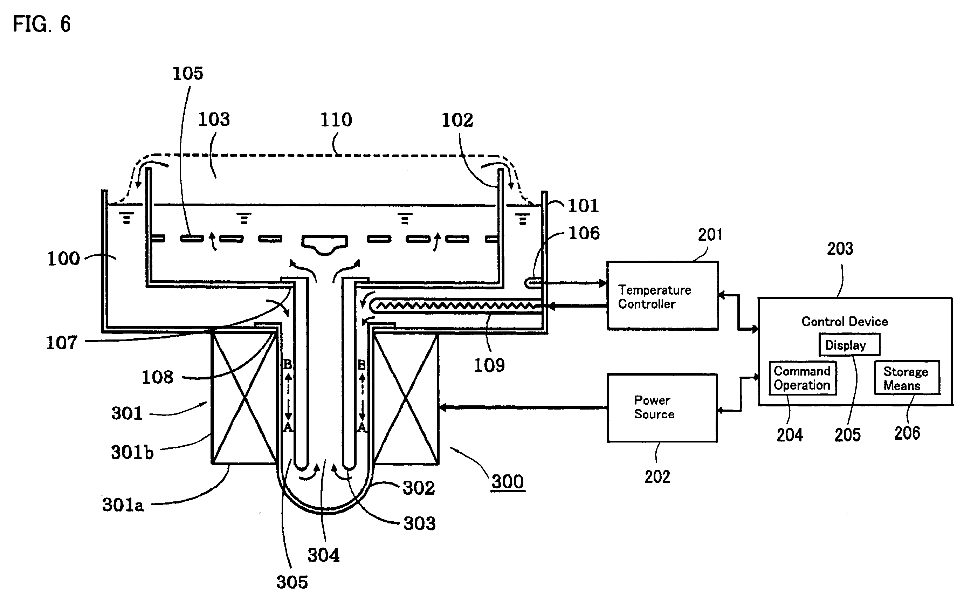

Description will be hereinafter made of a soldering apparatus according to the third embodiment of the present invention. FIG. 6 is a view illustrating an example of the configuration of a soldering apparatus according to the third embodiment of the present invention, in which a solder vessel 101 is shown in a vertical cross-sectional view, and a control system is shown in a block diagram. In FIG. 6,the component parts corresponding to those in FIG. 1 are designated by the same reference numerals, and their description will not be repeated here.

The amount of heat necessary to melt the solder 100 in the solder vessel 101 can be obtained from the volume of the solder 100 in the solder vessel 101, and the specific heat and heat of fusion of the solder 100.. The amount of heat to be supplied from the heater 109 is determined by the electric power to be supplied to the heater 109. From these, the period of time until the solder 100 in the solder vessel 101 is melted after the start of power supply to the heater 109 can be obtained. The percentage of heat which escapes into the atmosphere is set to a few percent if necessary.

The amount of heat necessary to melt the solder 100 in the linear pipe 302 can be obtained from the volume of the solder 100 in the linear pipe 302, the specific heat and heat of fusion of the solder 100 in the linear pipe 302, and the volume and specific heat of the inner core 303. The amount of heat generated by the induction heating by a moving magnetic field generated from the electromagnetic pump 300, more specifically, from the outer core 301 a and the coils 301 b, can be obtained from the amount of electric power to be supplied to the ALIP type electromagnetic pump 300 and the induction heating efficiency (which is a specified value obtained by measurement and usually is a few dozen percent). From these, the period of time until the solder 100 in the linear pipe is melted after the start of power supply to the ALIP type electromagnetic pump 300 can be obtained. The percentage of heat which escapes into the atmosphere is set to a few percent if necessary.

By dividing the total amount of heat, more specifically, the total amount of electric power, necessary to melt the solder 100 in the solder vessel 101 by the amount of electric power to be supplied to the heater 109 per unit time, the period of time necessary to melt the solder 100 in the solder vessel 101 can be obtained. Conversely, by dividing the total amount of heat, more specifically, the amount of electric power, necessary to melt the solder 100 in the solder vessel 101 by a target melting period, the electric power to be supplied to the heater 109 per unit time can be obtained.

Similarly, by dividing the total amount of heat, more specifically, the amount of electric power, necessary to melt the solder in linear pipe 302 by a value obtained by multiplying the amount of electric power to be supplied to the electromagnetic pump 300 per unit time by the induction heating efficiency, the period of time necessary to melt the solder 100 in the linear pipe 302 can be obtained. Conversely, by dividing the total amount of heat, more specifically, the amount of electric power, necessary to melt the solder 100 in the linear pipe 302 by a target melting period and dividing the thus obtained value by the induction heating efficiency, the electric power to be supplied to the electromagnetic pump 300 per unit time can be obtained.

Then, first information on the electric power (amount of electric power per unit time or total amount of electric power) to be supplied to the heater 109 and second information on the electric power (amount of electric power per unit time or total amount of electric power) to be supplied to the electromagnetic pump 300 obtained by using the above calculation methods have to be set in the control device 203 from the command operation part 204 and stored in a hard disk (storage means) 206 in the control device 203 as a data table in advance.

When the soldering apparatus is started, the CPU in the control device 203 controls the supply of electric power to the heater 109 and the supply of electric power to the electromagnetic pump 300 based on the data table such that the solder 100 in the linear pipe 302 (particularly the solder within the solder flow path 305) cannot be melted before the solder 100 in the solder vessel 101 (particularly the solder within the nozzle 102) is melted, i.e. such that the solder 100 in the linear pipe 302 is melted simultaneously with or after the melting of the solder 100 in the solder vessel 101. More specifically, the CPU in the control device 203 controls the supply of electric power to the heater 109 and the supply of electric power to the electromagnetic pump 300 based on the data table such that the solder in the solder vessel 101 (particularly the solder within the nozzle 102) starts melting before the solder in the linear pipe 302 (particularly the solder within the solder flow path 305) starts melting and that the melting of the solder in the solder vessel 101 (particularly the solder within the nozzle 102) is completed simultaneously with or before the completion of the melting of the solder in the linear pipe 302 (particularly the solder within the solder flow path 305).

A temperature sensor for measuring the temperature of the solder 100 in a region close to the surface level of the molten solder 100 in the solder vessel 101 and a temperature sensor for measuring the temperature of the solder 100 in the linear pipe 302 may be provided, and the theoretical amounts of electric power to be supplied calculated as described above may be corrected based on actual measurement values obtained by the temperature sensors. In this case, the measurement is carried out as follows. When the soldering apparatus is started, the temperature of the solder 100 increases to its melting point. Then, the temperature of the solder 100 stays constant at the melting point since heat of fusion is required until the solder 100 is completely melted. When the solder 100 is melted completely, the temperature of the molten solder 100 increases again.

Therefore, when the temperature sensor located close to the surface level of the molten solder 100 in the solder vessel 101 detects the fact that the temperature of the molten solder 100 starts increasing from the melting point is when the solder 100 in the solder vessel 101 is melted completely. Also, when the temperature sensor in the linear pipe 302 detects the fact that the temperature of the molten solder 100 starts increasing from the melting point is when the solder 100 in the linear pipe 302 is melted completely.

That is, the first information on the electric power (amount of electric power per unit time or total amount of electric power) to be supplied to the heater 109 and the second information on the electric power (amount of electric power per unit time or total amount of electric power) to be supplied to the electromagnetic pump 300 are set in the control device 203 such that the temperature of the solder 100 in the linear pipe 302 starts increasing from the melting point after the temperature of the solder 100 in the solder vessel 101 has started increasing from the melting point. Ten minutes is long enough for the interval between the temperature rises, but the temperature rises may occur simultaneously. When the control by the control device 203 is so programmed that the temperature rises can occur simultaneously, the starting time of the soldering apparatus can be minimized. The temperature sensor in the linear pipe 302 is provided only for the measurement for correction and not for use during soldering of the work to be soldered.

When first information on the electric power (amount of electric power per unit time or total amount of electric power) to be supplied to the heater 109 and second information on the electric power (amount of electric power per unit time or total amount of electric power) to be supplied to the electromagnetic pump 300 are set in the control device 203 to allow the control device 203 to perform appropriate control of the supply of electric power to the heater 109 and the supply of electric power to the electromagnetic pump 300, it is possible to prevent occurrence of a dangerous situation in which a lower part of solidified solder is melted earlier than the other part and the molten solder jets out through narrow gaps by its own expansion pressure.

After the soldering apparatus has been started as described above, the molten solder 100 reaches a predetermined temperature and maintained at the temperature. In this state, soldering of the work to be soldered such as a printed wiring board can be started.

Then, when electric power is supplied to the ALIP type electromagnetic pump 300 to generate a thrust, the molten solder 100 is sucked into the solder flow path 305 from the solder vessel 101 as indicated by arrows A in FIG. 6. Then, the flow direction of the molten solder 100 is reversed at the closed end 302a of the linear pipe 302, and the molten solder 100 is supplied into the nozzle 102 through the solder return path 304 in the inner core 303. After being smoothed by the straightening plate 105, the molten solder 100 is projected from the first opening 103 to form a projected wave 110.

When a thrust in a direction opposite the direction of the thrust for forming the projected wave 110 as indicated by broken line arrows B in FIG. 6 is generated at the start of the soldering apparatus (that is, when the solder return path 304 in the linear pipe 302 is heated by induction heating), the dangerous situation in which molten solder jets out can be prevented more reliably. That is, since the nozzle 102 is disposed over the electromagnetic pump 300 as shown in FIG. 6, a jet flow of molten solder can be blocked by the nozzle 102.

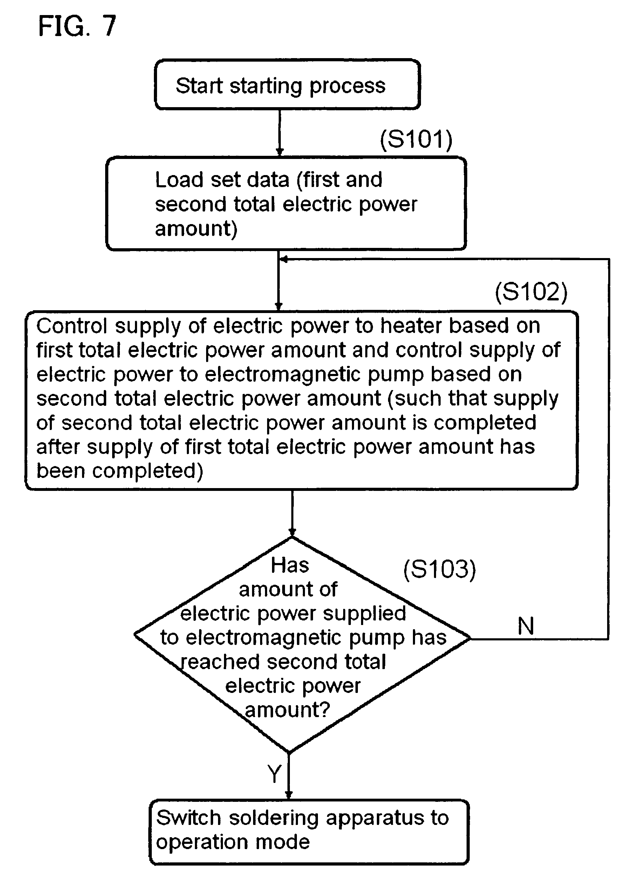

The control operation at the start of the soldering apparatus according to this embodiment will be described with reference to the flowchart in FIG. 7.

FIG. 7 is a flowchart illustrating an example of the control operation at the start of the soldering apparatus according to this embodiment. The operation of the flowchart is realized when the CPU in the control device 203 loads a program stored in the hard disk 206 into the RAM and executes the program. In FIG. 7, S101 to S103 represents the steps of the operation.

When a starting process is started, the CPU in the control device 203 loads set data into the RAM from the data table in the hard disk 206 in step S101. The set data are data set in advance from the command operation part 204 by the user. More specifically, the set data include the first information on the electric power (amount of electric power per unit time or total amount of electric power) to be supplied to the heater 109, the second information on the electric power (amount of electric power per unit time or total amount of electric power) to be supplied to the coils 301 b of the electromagnetic pump 300, and so on. Here, the following description will be made on the basis that a total electric power amount to be supplied to the heater 109 (first total electric power amount) and a total electric power amount to be supplied to the coils 301b of the electromagnetic pump 300 (second total electric power amount) have been set as the set data. The set data are obtained in advance by, for example, actual measurement as described before.

Next, in step S102, the CPU in the control device 203 controls the temperature control device 201 to control the supply of electric power to the heater 109 based on the total electric power amount to be supplied to the heater 109 (first total electric power amount) in the set data loaded in step S101. Also, the CPU in the control device 203 controls the multi-phaseAC power source 202 to control the supply of electric power to the coils 301 b of the electromagnetic pump 300 based on the total electric power amount to be supplied to the coils 301 b of the electromagnetic pump 300 (second total electric power amount) in the set data loaded in step S101.

At this time, the CPU in the control device 203 controls the electric power to be supplied to the heater 109 and the electric power to be supplied to the coils 301b of the electromagnetic pump 300 such that the solder 100 in the linear pipe 302 can not be melted before the solder 100 in the solder vessel 101 is melted (i.e. such that the solder in the solder vessel 101 starts melting before the solder in the linear pipe 302 starts melting and that the melting of the solder in the solder vessel 101 is completed simultaneously with or before the completion of the melting of the solder in the linear pipe 302). That is, the CPU in the control device 203 controls the electric power to be supplied to the heater 109 and the electric power to be supplied to the coils 301 b of the electromagnetic pump 300 such that the total amount of electric power supplied to the coils 301b of the electromagnetic pump 300 cannot reach the second total electric power amount before the total amount of electric power supplied to the heater 109 reaches the first total electric power amount.

The CPU in the control device 203 may control the electric power to be supplied to the heater 109 and the electric power to be supplied to the coils 301b of the electromagnetic pump 300 to be constant or vary with time. For example, the CPU in the control device 203 may control the electric power to be supplied to the heater 109 and the electric power to be supplied to the coils 301 b of the electromagnetic pump 300 such that a large amount of electric power is first supplied and the amount of electric power gradually decrease when the amount of electric power supplied becomes close to the total electric power amount. Also, the supply of electric power to the heater 109 and the supply of electric power to the coils 301 b of the electromagnetic pump 300 may be started simultaneously or sequentially.

That is, the CPU in the control device 203 configured to supply electric power to the heater 109 to heat the solder in the solder vessel 101 and to the coils 301b of the electromagnetic pump 300 to cause induction heating of the solder in the linear pipe 302 at a time the solder 100 in the solder vessel 101 is transformed from a solidified state to a molten state. At this time, the CPU in the control device 203 may control the supply of electric power to the heater 109 and the supply of electric power to the coils 301 b of the electromagnetic pump 300 by any method as long as the solder 100 in the linear pipe 302 cannot be melted before the solder 100 in the solder vessel 101 is melted. Any such methods are all included in the scope of the present invention.

Next, in step S103, the CPU in the control device 203 determines whether or not the total amount of electric power supplied to the coils 301 b of the electromagnetic pump 300 has reached the second total electric power amount. If no, then the CPU in the control device 203 continuously controls the supply of electric power to the heater 109 and the supply of electric power to the coils 301 b of the electromagnetic pump 300 until the total amount of electric power supplied to the coils 301b of the electromagnetic pump 300 reaches the second total electric power amount (S102).

If CPU in the control device 203 determines that the total amount of electric power supplied to the coils 301b of the electromagnetic pump 300 has reached the second total electric power amount in step S103, the CPU in the control device 203 ends the starting operation of the flowchart and switches the soldering apparatus from start mode to operation mode.

In this flowchart, the supply of electric power to the heater 109 and the supply of electric power to the electromagnetic pump 300 are controlled based on the first and second total electric power amounts set in the control device 203 as the set data such that the amount of electric power supplied to the electromagnetic pump 300 does not reach the second total electric power amount before the amount of electric power supplied to the heater 109 reaches the first total electric power amount. However, the amount of electric power to be supplied to the heater 109 per unit time (first electric power amount) and the amount of electric power to be supplied to the electromagnetic pump 300 per unit time (second electric power amount) may be set as the set data in the control device 203, and the control device 203 may control the supply of electric power to the heater 109 and the supply of electric power to the electromagnetic pump 300 based on the first and second electric power amounts.

As described above, at a time the solder 100 in the solder vessel 101 is transformed from a solidified state to a molten state, the CPU in the control device 203 configured to supply electric power to the heater 109 to heat the solder in the solder vessel 101 and to the coils 301b of the electromagnetic pump 300 to cause induction heating of the solder in the linear pipe 302. At this time, the CPU in the control device 203 controls the supply of electric power to the heater 109 and the supply of electric power to the coils 301 b of the electromagnetic pump 300 such that the solder 100 in the linear pipe 302 cannot be melted before the solder 100 in the solder vessel 101 is melted. Therefore, the period of time necessary to melt the solder in a solidified state in order to start the soldering apparatus can be significantly and safely shortened.

As a result, maintenance time and starting time of the soldering apparatus are shortened and the efficiency of the soldering can be significantly improved.

Although not shown, an auxiliary heater may be provided outside the closed end 302a of the linear pipe 302 at which the flow direction of the molten solder is reversed so that the solder in the linear pipe 302 can be subjected to heating by the auxiliary heater in addition to the induction heating by the electromagnetic pump 300 when the soldering apparatus is started.

Also, when soldering of printed wiring boards is conducted with the soldering apparatus, the projecting of molten solder is temporarily suspended when the type or model of printed wiring boards to be soldered is changed or at breaks during production operation. During such a temporally suspension of the soldering apparatus, electric power to such an extent that the molten solder is not projected may be supplied to the electromagnetic pump 300 or the auxiliary heater to continue the induction heating of the molten solder 100 in the linear pipe 302 in order to prevent a drop in temperature of the molten solder 100 in the linear pipe 302.

### Fourth embodiment

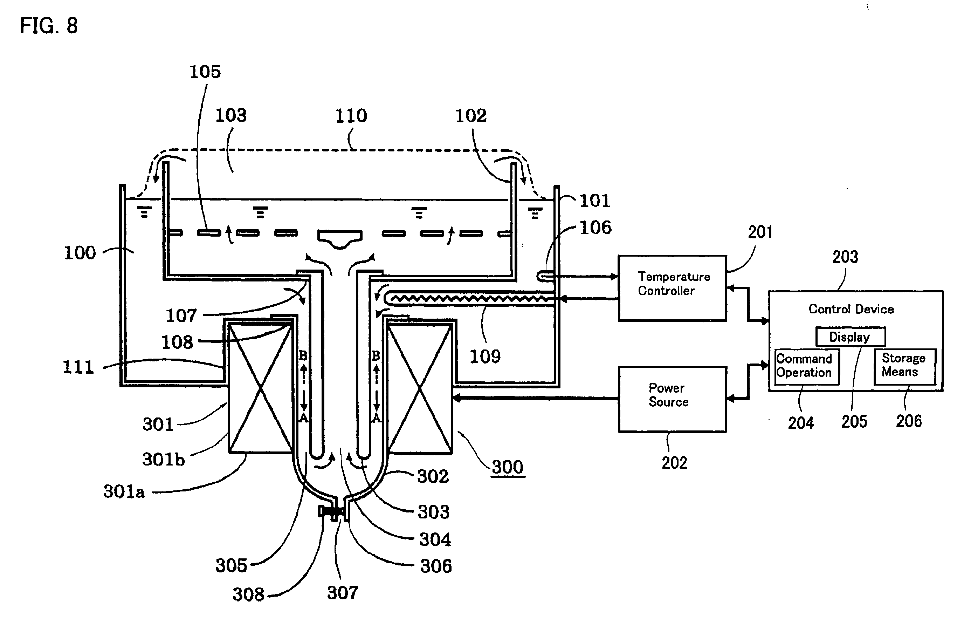

Description will be hereinafter made of a soldering apparatus according to a fourth embodiment of the present invention with reference to FIG. 8.

FIG. 8 is a view illustrating an example of the configuration of a soldering apparatus according to the fourth embodiment of the present invention, in which a solder vessel 101 is shown in a vertical cross-sectional view, and a control system is shown in a block diagram. In FIG. 8, the component parts as those in FIG. 6 are designated by the same reference numerals, and their description will not be repeated here. The difference between this embodiment and the third embodiment shown in FIG. 6 is that the bottom wall 101a of the solder vessel 101 has a recess 111 for receiving the drive means 301 (the outer core 301a and the coils 301b) to increase the capacity of the solder vessel 101 without increasing the maximum dimensions of the soldering apparatus.

In this configuration, since heat loss from the electromagnetic pump 300 can be directly transferred to the solder vessel 101 and the solder 100 contained therein from the drive means 301 (the outer core 301a and the coils 301b) as well as from the linear pipe 302, the total energy efficiency of the soldering apparatus can be improved.

Since the capacity of the solder vessel 101 is increased so that the solder vessel 101 can contain a larger amount of solder, the decrease in temperature of the molten solder 100 at the time when the work to be soldered contacts the projected wave 110 can be small and the temperature of the molten solder 100 can be maintained stably in large-scale production.

In this embodiment, the linear pipe 302 has a drain 306 (a drain opening 307 and a valve 308) at the lower end thereof. The drain 306 is used to discharge the solder in the solder vessel 101 through the linear pipe 302. When the electromagnetic pump 300 is driven at the time of draining (when the valve 308 is opened to discharge the solder through the drain opening 307), the discharge of the solder can be carried out quickly by the thrust generated by the electromagnetic pump 300.

### Fifth embodiment

In general, a soldering apparatus for soldering a printed wiring board having electronic parts mounted thereon has a plurality of solder vessels each provided with a different type of nozzle or a solder vessel provided with at least two different types of nozzles so that at least two types of projected waves can be formed. Each of the nozzles is provided with an electromagnetic pump.

In this configuration, however, when not all the projected waves are used simultaneously, some of the nozzles, in other words, some of the electromagnetic pumps are not used. This is not economically efficient since expensive electromagnetic pumps cannot be used effectively.

A fifth embodiment of the present invention provides a system which allows more effective use of expensive electromagnetic pumps so that a soldering apparatus can be provided at a lower price and the productivity of a soldering apparatus can be improved.

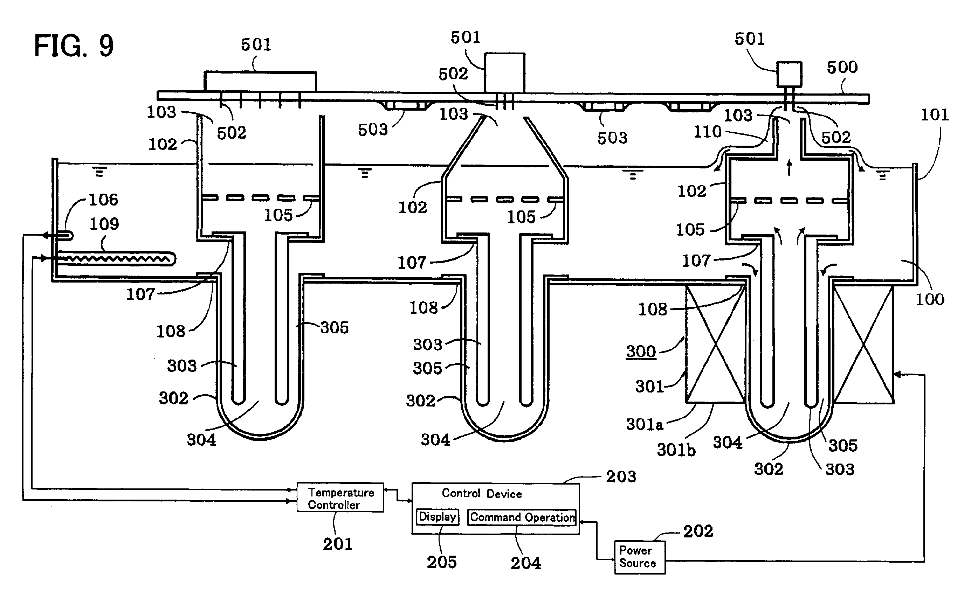

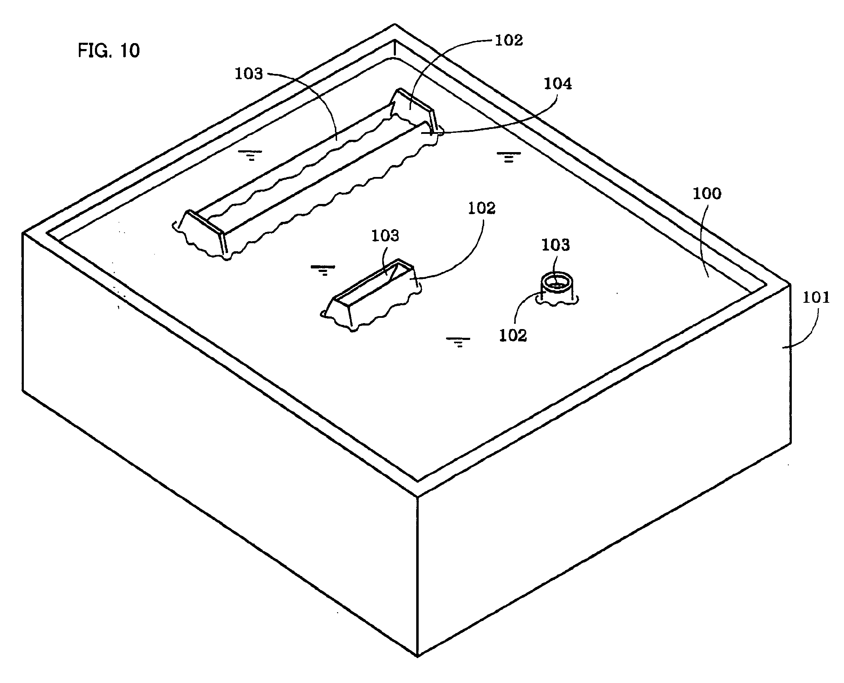

Description will be hereinafter made of a soldering apparatus according to a fifth embodiment of the present invention with reference to FIGs 9 and 10. In FIGS. 9 and 10, the component parts corresponding to those in FIG. 1 are designated by the same reference numerals, and their description will not be repeated here.

The solder vessel 101 of this embodiment has a bottom wall 101a provide with a plurality of holes 108, to each of which a linear pipe 302 for an ALIP type electromagnetic pump 300 is connected by means of welding or screwing.

The soldering apparatus has a plurality of nozzles 102 corresponding in number to the number of the holes 108 and disposed in the solder vessel 101. A cylindrical inner core 303 defining an axially extending solder return path 304 therein is removably inserted into each of the linear pipes 302 to define an annular, solder flow path 305 therebetween. Each of the solder return paths 304 of the inner cores 303 is communicated with the second opening 107 of the corresponding nozzle 102.

Each of the nozzles 102 is provided therein with a straightening plate 105 for smoothing the flow of the molten solder 100. When the molten solder 100 is projected from the first opening 103, a projected wave 110 is formed above the first opening 103 and the molten solder 100 flows down on guide plates 104 provided on both sides of the first opening 103 (or walls of the nozzle 102).

Each of the inner cores 303 and the nozzles 102 is removably fixed to the solder vessel 101 by means of a support means (not shown).

The linear pipes 302, the inner cores 303 and the nozzles 102 are provided in the solder vessel 101 in the same number as the number of projected waves or types of projected waves required.

Although three types of nozzles 102 are provided in required positions in one solder vessel 101 to form three types of projected waves in the example shown in FIGs. 9 and 10, the soldering apparatus may have a plurality of solder vessels each provided with one linear pipe 302, one inner core 303 and one nozzle 102, or with a required number of linear pipes 302, inner cores 303 and nozzles 102.

A drive means 301, in which the outer core 301a and the coils 301b are integrally combined, for generating a moving magnetic field between the inner core 303 and the linear pipe 302 can be rotatably and removably provided around each of the linear pipes 302.

Although the ALIP type electromagnetic pump 300 can be disposed on the bottom wall 101 a of the solder vessel 101 in the example shown in FIGs. 9 and 10, the ALIP type electromagnetic pump 300 may be able to be disposed on a side wall of the solder vessel 101. That is, the holes 108 are formed through a side wall of the solder vessel 101 and the linear pipes 302 are connected to the corresponding holes 108. An inner core 303 with a solder return path 304 is inserted into each of the linear pipes 302, and the solder return path 304 of the inner core 303 is connected to the second opening 107 of the corresponding nozzle 102 with an L-shaped pipe or duct so that the molten solder can be supplied to the nozzle 102 through the solder return path 304.

In this case, since the linear pipes 302 for the ALIP type electromagnetic pump 300 extend horizontally from a side wall of the solder vessel 101, the drive means 301 is configured to be able to be provided around the linear pipes 302 extending horizontally.

When the drive means 301 is provided around one of the linear pipes 302, the molten solder 100 is supplied from the solder flow path 305 therein to the corresponding nozzle 102 through the solder return path 304 in the inner core 303 in the linear pipe 302.

In the present invention, the number "Ns" of the linear pipes 302 and the number "Md" of the drive means 301 are not necessarily equal to each other but has the following relation: Ns ≥ Md. That is, the drive means 301 are mounted on only the linear pipes 302 which forms required projected waves 110 and used. Therefore, the number of the drive means 301 is at least one. In general, since all the projected waves are seldom formed simultaneously, it is enough to prepare the drive means 301 in a number smaller than the number of the linear pipes 302, that is, the number of the nozzles 102. Each of the drive means 301 is capable of being selectively positioned relative to a desired one of the linear pipes 302 to generate a moving magnetic field in the corresponding solder flow path 305 when the coils thereof are electrically energized, so that the molten solder flows downward through the corresponding solder flow path 305, then flows upward through the corresponding solder return path 304 and is projected from the first opening 103 of the corresponding nozzle 102 to form a solder wave 110 above the corresponding first opening 103.

In the example shown in FIG. 9, the nozzles 102 are provided at positions corresponding to the positions of leads 502 to be soldered of lead type electronic parts 501 mounted on a printed wiring board 500. One drive means 301 is provided around the linear pipes 302 in sequence to form one projected wave after another to carry out flow soldering of all the leads 502 to be soldered. Designated as 503 are chip-type electronic parts. In the illustrated case, the chip-type electronic parts 503 have been already soldered during their passage through the upstream solder waves.

The installation and removal of the drive means 301 may be automatically performed by, for example, a transporting means (three-axis robot, not shown) constituted by combining an X-Y actuator (horizontal X-Y stage actuator) with a Z-axis direction actuator or may be manually conducted by operators.

When the procedure of installation and removal is programmed in the controller (computer system) of the three-axis transporting means (three-axis robot, not shown) in advance, it can be carried out automatically. When a four-axis transporting means having an actuator which can rotate the drive means 301 about the Z-axis is used, the drive means 301 can be rotated at the time of installation thereof. Then, the drive means 301 can be in close contact with the linear pipe 302, and an optimum magnetic field distribution can be obtained to stabilize a thrust in the solder flow path 305.

Therefore, when the controller of a three or more axis transporting means (three-axis robot, not shown) is communicably connected to the control device 203, and when the control device 203 controls the electric power to be supplied to the drive means 301 only when the controller of the three or more axis transporting means transmits a notification that the installation of the drive means 301 has been completed to the control device 203, required projected waves can be formed sequentially.

As described before, the melting point of the solder depends on the type thereof. Thus, the temperature of the solder for use in soldering of printed wiring boards is varied depending upon the type of the solder. In such a case, different types of solders must be used for soldering of electronic parts on one printed wiring board depending on the parts to be soldered in some cases. In such a soldering apparatus, different types of solders are contained in a plurality of solder vessels so that projected waves of different types of solders can be formed.

When the technique of this embodiment is applied to a soldering apparatus which uses a plurality of types of solders, the same drive means can be used to form projected waves of different types of solders, and expensive electromagnetic pumps can be used effectively. Therefore, a soldering apparatus can be provided at a lower price and the productivity of a soldering apparatus can be improved. In the third to fifth embodiments, the solder vessel 101 preferably has a bottom wall made of an iron having at least 100 times as high as a magnetic permeability as that of the molten solder 100 and having a magnetic permeability not less than that of the inner core(s) 303 and a wall thickness not less than that of the inner core(s) 303. When the leakage magnetic field from the electromagnetic pump 300 does not adversely affect the printed wiring boards to be soldered, however, the solder vessel may have a conventional bottom wall.

The embodiments of the present invention have been described previously. The present invention can be embodied in the form of a system, device, method, program or storage medium. More specifically, the present invention may be applied to a system consisting of a plurality of devices or to an apparatus consisting of one device.

It is matter of course that the object of the present invention can be accomplished by providing a system with a storage medium in which a program code of software for realizing the functions of the embodiments and causing a computer (or CPU or MPU) of the system or device to load and execute the program code stored in the storage medium.

In this case, the program code itself loaded from the storage medium realize a novel function of the present invention, and the storage medium in which the program code is stored constitutes the present invention.

The soldering apparatus according to the present invention is used for soldering of electronic parts mounted on printed wiring boards. According to the present invention, the period of time for maintenance of a soldering apparatus can be shortened, and the influence of a leakage magnetic field or a stray current during soldering can be prevented. Therefore, soldering of electronic parts can be carried out with high reliability and high productivity.

Also, according to the present invention, starting time of a soldering apparatus can be shortened, and high-quality soldering with an electromagnetic pump can be carried out safely.

Also, according to the present invention, a soldering apparatus in which a plurality of types of projected waves can be formed sequentially or a plurality of projected waves can be formed at different positions can be constituted at a low cost.

In addition, the position of a projected wave can be changed freely even with one drive means, the soldering apparatus can be used as a point soldering apparatus.

## Claims

1. A soldering apparatus for soldering a printed wiring board, comprising:
a solder vessel (101) containing a molten solder (100) and having a bottom wall (101 a) provided with a hole (108);
a nozzle (102) disposed in said solder vessel (101) and having a first opening (103) at one end thereof and a second opening (107) at the other end thereof, said first opening (103) being positioned above the surface level of the molten solder (100) contained in said solder vessel (101); and
an electromagnetic pump (300) including
a linear pipe (302) having a closed end (302a) and an open end (302b) which is opposite said closed end (302a) and which is connected to said hole (108) so that the molten solder (100) in said solder vessel (101) can flow into said linear pipe (302),
a cylindrical inner core (303) defining a solder return path (304) therein and disposed within said linear pipe (302) to define an annular, solder flow path (305) therebetween, said inner core (303) having an upper opening (303a) connected to said second opening (107) of said nozzle (102) and a lower opening (303b) facing said closed end (302a) of said linear pipe (302), and
an outer core (301 a) with electrically energizable coils (301 b) disposed to surround said linear pipe (302) and configured to generate a moving magnetic field in said solder flow path (305) when said coils (301 b) are electrically energized, so that the molten solder flows downward through said solder flow path (305), then flows upward through said solder return path (302) and is projected from said first opening (103) of said nozzle (102) to form a solder wave above said first opening (103),
wherein said bottom wall (101a) of said solder vessel (101) is made of an iron having at least 100 times as high a magnetic permeability as that of the molten solder (100) and has a magnetic permeability not less than that of said inner core (303) and a wall thickness not less than that of said inner core (303).

2. A soldering apparatus as claimed in claim 1, wherein said bottom wall (101a) and said inner core (303) are each made of a cast iron.

3. A soldering apparatus as claimed in claim 1, wherein said solder vessel (101) has an interior surface covered with an anti-corrosive electrically insulating layer with a thickness of at least 30 µm, and wherein said inner core (303) is covered throughout with an anti-corrosive electrically insulating layer with a thickness of at least 30 µm.

4. A soldering apparatus as claimed in claim 1, further comprising a heater (109) disposed in said solder vessel (101) for heating the solder (100), and a control means (203) for controlling a supply of electric power to said heater (109) and a supply of electric power to said coils (301 b) of said electromagnetic pump (300),
said control means (203) being configured to control the supply of electric power to said heater (109) and the supply of electric power to said coils (301b) of said electromagnetic pump (300) at a time the solder (100) in said solder vessel (101) is transformed from a solidified state to a molten state, such that the solder (100) in said solder vessel starts melting before the solder (100) in said linear pipe (302) starts melting and melting of the solder (100) in said solder vessel (101) is completed simultaneously with or before the completion of melting of the solder (100) in said linear pipe (302).

5. A soldering apparatus as claimed in claim 4, wherein said control means (203) comprises a storage means (206) for storing first information on the amount of electric power necessary to be supplied to said heater (109) to transform the solder (100) in said solder vessel (101) from a solidified state into a molten state and second information on the amount of electric power necessary to be supplied to said coils (301b) for induction heating to transform the solder in said linear pipe (302) from a solidified state into a molten state,
and wherein said control means (203) is configured to control the supply of electric power to said heater (109) and the supply of electric power to said coils (301b) of said electromagnetic pump (300) at a time the solder (100) in said solder vessel (101) is transformed from a solidified state to a molten state, such that the supply of electric power to said heater (109) in the amount as prescribed in said first information can be completed simultaneously with or before the completion of supply of electric power to said coils (301b) of said electromagnetic pump (300) in the amount as prescribed in said second information.

6. A soldering apparatus as claimed in claim 5, wherein said first information represents a total amount of electric power necessary to be supplied to said heater (109) to transform the solder (100) in said solder vessel (101) from a solidified state into a molten state, and said second information represents a total amount of electric power necessary to be supplied to said coils (301b) for induction heating to transform the solder (100) in said linear pipe (302) from a solidified state into a molten state.

7. A soldering apparatus as claimed in claim 4, wherein said control means (203) is configured to control the supply of electric power to said coils (301 b) such that a moving magnetic field which causes the molten solder (100) to flow upward through said solder flow path (305) is generated at a time the solder (100) in said solder vessel (101) is transformed from a solidified state to a molten state.
